# EUROPEAN PATENT APPLICATION

(11) **EP 4 247 049 A1**
(43) Date of publication of application: **20.09.2023**
(21) Application number: 22845100.1
(22) Date of filing: 28.06.2022
(51) Int. Cl.: H04W 28/10

(54) **DATA PROCESSING METHOD, NETWORK ELEMENT DEVICE, AND READABLE STORAGE MEDIUM**

(30) Priority: 23.07.2021 CN 202110839104
(71) Applicant: TENCENT TECHNOLOGY (SHENZHEN) COMPANY LIMITED, Shenzhen, Guangdong 518057 (CN)
(72) Inventor: ZHANG, Zhuoyun, Shenzhen, Guangdong 518057 (CN)
(74) Representative: Gunzelmann, Rainer
(86) International application number: PCT/CN2022/102056
(87) International publication number: WO 2023/000935

(57) **Abstract**

Provided are a data processing method, a network element device, and a readable storage medium. The method includes the following steps: acquiring a domain name system message report including at least two edge application server addresses, selecting a target data network access identifier, and taking an edge application server address, having a mapping relationship with the target data network access identifier, in the at least two edge application server addresses as an offloading edge application server address; and generating, by a session management function, an offloading rule for an intermediate user plane function according to the offloading edge application server address.

## Description

### RELATED APPLICATION

This application claims priority to Chinese Patent Application No. 202110839104.1 filed on July 23, 2021, which is incorporated herein by reference in its entirety.

### FIELD OF THE TECHNOLOGY

This application relates to the technical field of communication, and in particular, to a data processing method, a network element device, and a readable storage medium.

### BACKGROUND OF THE DISCLOSURE

With the popularity and rapid development of intelligent terminals, the volume of data generated at a network edge increases rapidly, further promoting the development of edge computing.

Currently, in the 5th generation mobile communication technology (abbreviated as 5G) supporting edge computing, user equipment (UE) can obtain an edge application service through an edge application server (EAS). Before obtaining an edge application service, the user equipment needs to discover an Internet Protocol (IP) address of a suitable edge application server, and an existing EAS discovery method is to query and obtain an IP address of an edge application server according to a domain name system (DNS) mechanism. In this process, a session management function (SMF) in a 5G core network will generate an offloading rule according to an IP address of an edge application server that is obtained by querying, an intermediate user plane function (I-UPF) configures an offloading path for the user equipment according to the offloading rule, and then an edge application server discovery function (EASDF) transmits the IP address to the user equipment, so that the user equipment can access the edge application server via the IP address and the offloading path. However, the edge application service may correspond to a plurality of available IP addresses, and the user equipment selects the IP address for use randomly. Therefore, the SMF needs to configure an offloading rule for each IP address, and establish offloading paths between the I-UPF and local protocol data unit session anchor (L-PSA) UPFs associated with all the IP addresses, and the offloading paths corresponding to the IP addresses that are not selected by the user equipment will be idle, resulting in waste of network resources.

### SUMMARY

Embodiments of this application provide a data processing method, a network element device, and a readable storage medium, which can reduce waste of network resources.

In an aspect, the embodiments of this application provide a data processing method, which includes the following steps:
receiving, by a session management function, a domain name system message report transmitted by an edge application server discovery function, the domain name system message report including at least two edge application server addresses;
selecting, by the session management function, a target data network access identifier, and taking an edge application server address, having a mapping relationship with the target data network access identifier, in the at least two edge application server addresses as an offloading edge application server address; and
generating, by the session management function, an offloading rule for an intermediate user plane function according to the offloading edge application server address.

In an aspect, the embodiments of this application provide a data processing method, which includes the following steps:
receiving, by an edge application server discovery function, a domain name system response message transmitted by a domain name system server, the domain name system response message including at least two edge application server addresses;
selecting, by the edge application server discovery function, a target data network access identifier, and taking an edge application server address, having a mapping relationship with the target data network access identifier, in the at least two edge application server addresses as an offloading edge application server address; and
transmitting, by the edge application server discovery function, the offloading edge application server address and the target data network access identifier to a session management function, so that the session management function generates an offloading rule for an intermediate user plane function according to the offloading edge application server address, and establishes an offloading path between the intermediate user plane function and an edge anchor user plane function corresponding to the target data network access identifier.

In an aspect, the embodiments of this application provide a data processing method, which includes the following steps:
receiving, by an intermediate user plane function, an offloading rule delivered by a session management function,
the offloading rule being generated according to an offloading edge application server address, the offloading rule being used for forwarding a service access request from user equipment for accessing the offloading edge application server address to an edge anchor user plane function corresponding to a target data network access identifier, the target data network access identifier being selected and obtained by the session management function after receiving a domain name system message report transmitted by an edge application server discovery function, and the domain name system message report including at least two edge application server addresses, and the offloading edge application server address referring to an edge application server address, having a mapping relationship with the target data network access identifier, in the at least two edge application server addresses.

In an aspect, the embodiments of this application provide a network element apparatus, which includes:
a report receiving module, configured to receive, by a session management function, a domain name system message report transmitted by an edge application server discovery function, the domain name system message report including at least two edge application server addresses;
an identifier selection module, configured to select a target data network access identifier;
an address selection module, configured to take an edge application server address, having a mapping relationship with the target data network access identifier, in the at least two edge application server addresses as an offloading edge application server address; and
a rule generation module, configured to generate an offloading rule for an intermediate user plane function according to the offloading edge application server address.

In an aspect, the embodiments of this application provide a network element apparatus, which includes:
a receiving module, configured to receive, by an edge application server discovery function, a domain name system response message transmitted by a domain name system server, the domain name system response message including at least two edge application server addresses;
an identifier selection module, configured to select a target data network access identifier;
an address selection module, configured to take an edge application server address, having a mapping relationship with the target data network access identifier, in the at least two edge application server addresses as an offloading edge application server address; and
a transmission module, configured to transmit the offloading edge application server address and the target data network access identifier to a session management function, so that the session management function generates an offloading rule for an intermediate user plane function according to the offloading edge application server address, and establishes an offloading path between the intermediate user plane function and an edge anchor user plane function corresponding to the target data network access identifier.

In an aspect, the embodiments of this application provide a network element apparatus, which includes:
a rule receiving module, configured to receive, by an intermediate user plane function, an offloading rule delivered by a session management function, the offloading rule being generated according to an offloading edge application server address, the offloading rule being used for forwarding a service access request from user equipment for accessing the offloading edge application server address to an edge anchor user plane function corresponding to a target data network access identifier, the target data network access identifier being selected and obtained by the session management function after receiving a domain name system message report transmitted by an edge application server discovery function, and the domain name system message report including at least two edge application server addresses, and the offloading edge application server address referring to an edge application server address, having a mapping relationship with the target data network access identifier, in the at least two edge application server addresses.

In an aspect, the embodiments of this application provide a network element device, which includes: a processor, a memory, and a network interface.

The foregoing processor is connected to the foregoing memory and the foregoing network interface. The foregoing network interface is configured to provide a data communication network element, the foregoing memory is configured to store a computer program, and the foregoing processor is configured to invoke the foregoing computer program to cause the network element device to perform the method according to the embodiments of this application.

In an aspect, the embodiments of this application provide a computer-readable storage medium, which stores a computer program therein. The foregoing computer program is adapted to be loaded and executed by a processor to perform the method according to the embodiments of this application.

In an aspect, the embodiments of this application provide a computer program product or computer program, which includes computer instructions. The computer instructions are adapted to be loaded and executed by a processor to perform the method according to the embodiments of this application.

In the embodiments of this application, the session management function acquires at least two edge application server addresses, selects a target data network access identifier, takes an edge application server address, having a mapping relationship with the target data network access identifier, in the at least two edge application server addresses as an offloading edge application server address, and generates an offloading rule for the intermediate user plane function according to the offloading edge application server address. It can be seen that in the embodiments of this application, the session management function does not generate offloading rules for all edge application server addresses, but determines an offloading edge application server address according to a selection mechanism, and subsequently the intermediate user plane function can forward a service access request from user equipment for accessing the offloading edge application server address to a corresponding offloading path according to the offloading rule. The offloading path may be an offloading path between the intermediate user plane function and an edge anchor user plane function corresponding to the target data network access identifier that is established by the session management function. It can be seen that the session management function does not need to establish offloading paths associated with all edge application server addresses any more, which can reduce the occurrence of a situation where the offloading paths are idle, and thus reduce waste of network resources.

### BRIEF DESCRIPTION OF THE DRAWINGS

In order to describe the technical solutions in the embodiments of this application or the related art more clearly, the drawings need to be used in the description of the embodiments or the related art will be briefly introduced below. Obviously, the drawings in the following description are only some embodiments of this application, and those of ordinary skill in the art may obtain other drawings according to these drawings without involving any inventive effort.
FIG. 1 is a schematic diagram of a system architecture according to an embodiment of this application.
FIG. 2a to FIG. 2c are schematic diagrams of scenes of a data processing method according to embodiments of this application.
FIG. 3 is a schematic flowchart of a data processing method according to an embodiment of this application.
FIG. 4a to FIG. 4c are schematic diagrams of scenes of selection of a target data network access identifier according to embodiments of this application.
FIG. 5 is a schematic flowchart of a data processing method according to an embodiment of this application.
FIG. 6 is a schematic flowchart of a data processing method according to an embodiment of this application.
FIG. 7 is a schematic interaction diagram of discovery of an edge application server according to an embodiment of this application.
FIG. 8 is a schematic diagram of a network architecture for an offloading path according to an embodiment of this application.
FIG. 9 is a schematic structural diagram of a network element apparatus according to an embodiment of this application.
FIG. 10 is a schematic structural diagram of a network element apparatus according to an embodiment of this application.
FIG. 11 is a schematic structural diagram of a network element apparatus according to an embodiment of this application.
FIG. 12 is a schematic structural diagram of a network element device according to an embodiment of this application.
FIG. 13 is a schematic structural diagram of a network element device according to an embodiment of this application.
FIG. 14 is a schematic structural diagram of a network element device according to an embodiment of this application.

### DESCRIPTION OF EMBODIMENTS

The technical solutions in the embodiments of this application will be clearly and completely described below with reference to the drawings in the embodiments of this application. Obviously, the described embodiments are only some but not all of the embodiments of this application. All other embodiments obtained by those of ordinary skill in the art based on the embodiments of this application without involving any inventive effort shall fall within the scope of protection of this application.

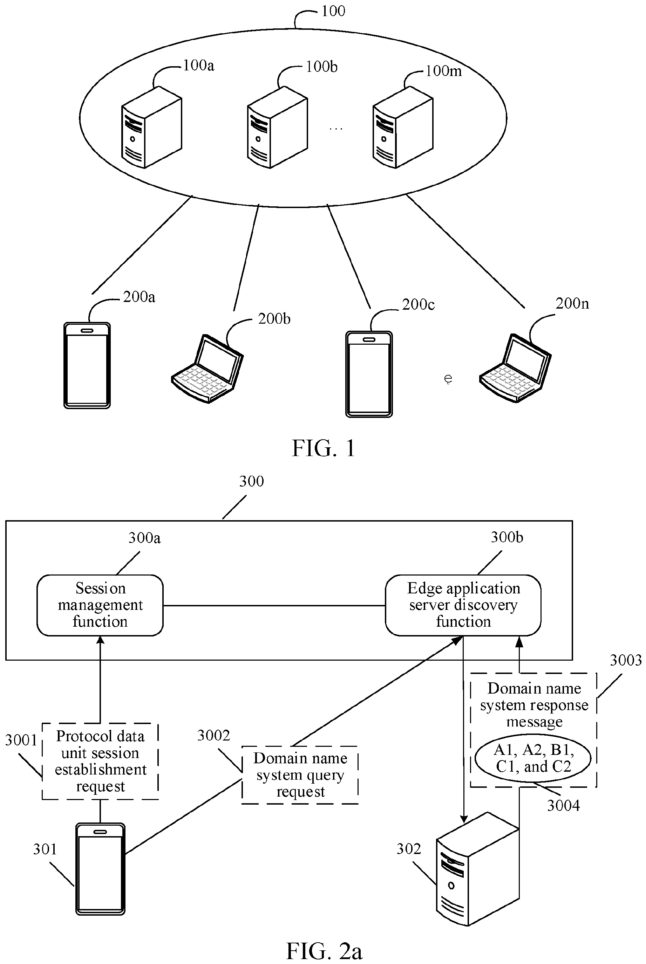

Referring to FIG. 1, FIG. 1 is a schematic diagram of a system architecture according to an embodiment of this application. The system architecture may be applied to service scenes supporting edge computing. Edge computing refers to a platform that integrates network, computing storage, and application core capabilities at a network edge close to things or data sources and provides edge intelligent services nearby to meet the key requirements of industry digitization for agile connection, real-time services, data optimization, application intelligent security and privacy protection, and the like. Edge computing enables a carrier and a third-party service to be hosted close to an access point of user equipment, thereby achieving efficient service capabilities by reducing end-to-end latency and payload on a transport network.

The 5th generation mobile communication technology (abbreviated as 5G) is a new-generation broadband mobile communication technology with the characteristics of high speed, low latency, and large connection, which is a network infrastructure for realizing human-machine-thing interconnection. The International Telecommunication Union (ITU) defines typical applications scenes for 5G, which include: enhanced mobile broadband (eMBB), ultra-reliable and low latency communication (URLLC), URLLC and massive machine type of communication (mMTC), vehicle to everything (V2X), and the like. On the one hand, the foregoing eMBB scene provides high-traffic mobile broadband services such as high-speed downloading, high-definition videos, and virtual reality (VR)/augmented reality (AR). The peak rate of these services usually exceeds 10 Gbps, and the bandwidth requirement is as high as tens of Gbps, causing great pressure on wireless midhaul and backhaul mobile networks. Therefore, these service requirements need to sink services to a network edge as much as possible to realize local offloading of the services. On the other hand, the URLLC scene and the V2X scene can provide ultra-high reliability and ultra-low latency communication such as automatic driving, industrial control, and telemedicine, which require end-to-end reliability as high as 99.999% and ultra-low end-to-end latency less than 1 ms. Therefore, these service requirements also need to sink services to a network edge to reduce the network latency caused by network transmission and multi-level service forwarding.

It can be seen from the above that the promotion of 5G increases the demand for edge computing. In addition, the combined use of edge computing and 5G can help networks experiencing sudden and sustained traffic surges address bandwidth, speed, and security issues.

As shown in FIG. 1, the system architecture may include an edge data center 100 and a terminal cluster. The terminal cluster may include: user equipment 200a, user equipment 200b, user equipment 200c, ..., and user equipment 200n, and the edge data center 100 may include a plurality of edge application servers (EASs) such as an edge application server 100a, an edge application server 100b, ..., and an edge application server 100m. There may be a communication connection between the user equipment. For example, there is a communication connection between the user equipment 200a and the user equipment 200b, and there is a communication connection between the user equipment 200a and the user equipment 200n. There may be a communication connection between the edge application servers. For example, there is a communication connection between the edge application server 100a and the edge application server 100b. Moreover, there may be a communication connection between any user equipment in the terminal cluster and any edge application server in the edge data center 100. For example, there is a communication connection between the user equipment 200a and the edge application server 100a. A connection mode of the foregoing communication connection is not limited, and may be a 4G wireless access mode or a 5G wireless access mode, which is not defined herein.

In mobile communication, the system architecture shown in FIG. 1 may further include an access network, a bearer network (a transmission network), and a core network. A plurality of base stations (such as a 5G base station gNB) may be deployed in the access network and are mainly responsible for access and management of the user equipment at a wireless side. The bearer network may be composed of a series of switching and routing devices of a carrier, and is mainly used for transmitting control signaling and user data between the base stations and the core network. A series of core network elements ("network elements" may also be referred to as "network functions") may be deployed in the core network, and cooperate to perform authentication, charging, and mobility management on the user equipment. The access network and the bearer network will not be described in detail here.

To facilitate the understanding and description of subsequent embodiments, the main core network elements involved in the embodiments of this application are first briefly introduced here, specifically as follows:
(1) Session management function (SMF): a functional unit of a 5G service-oriented architecture. In the embodiments of this application, the SMF may also be referred to as a session management network element, and its main functions are as follows:
   (a) responsible for session establishment, deletion, and update;
   (b) user plane selection and control;
   (c) user equipment (that is, a terminal device or a user device) Internet Protocol (IP) address assignment and management; and
   (d) controlling and managing a user plane function (UPF), and delivering various policies for performing the processing of service flows to the UPF.
(2) User plane function (UPF): the only module for processing data in a 5G core network. In the embodiments of this application, the UPF may also be referred to as a user plane network element, and its main functions are as follows:
   (a) responsible for data routing and forwarding of a user plane of a mobile core network, and interconnection with an external data network (such as a carrier service, the Internet or a third-party service);
   (b) supporting the routing and forwarding of UE service data; and
   (c) accepting SMF control and management, and performing the processing of service flows according to various policies delivered by the SMF.
(3) Policy control function (PCF): mainly responsible for management of network behavior through a unified policy framework and execution of relevant policies in conjunction with user information in a unified data repository (UDR). In the embodiments of this application, the PCF may also be referred to as a policy control network element.
(4) Edge application server discovery function (EASDF): in the embodiments of this application, the EASDF may also be referred to as an edge application server discovery network element, and its main functions are as follows:
   (a) registering with a network repository function (NRF) for EASDF discovery and selection; and
   (b) processing a domain name system (DNS) message according to an instruction of the SMF, which includes:
      (b1) receiving a DNS message processing rule from the SMF;
      (b2) exchanging a DNS message from the UE;
      (b3) forwarding the DNS message to a central DNS (C-DNS) server or local DNS (L-DNS) server for DNS query;
      (b4) adding an extension mechanism for DNS (EDNS, an extended DNS mechanism) client subnet (ECS) option to the DNS query for a fully qualified domain name (FQDN);
      (b5) notifying the SMF of EASDF-related information; and
      (b6) terminating DNS security in a case that DNS over TLS (DoT, transmission of the DNS protocol using the TLS protocol), DNS over HTTPS (DoH, transmission of the DNS protocol using the HTTPS protocol), or DNS over DTLS (transmission of the DNS protocol using the datagram transport layer security (DTLS)) is used.

The UPF may interact with the SMF via a data plane interface. The EASDF may be connected to a PDU session anchor (PSA) UPF via a data plane interface and may be configured to transmit the DNS message exchanged with the UE. In addition, a plurality of EASDF instances may be deployed in one public land mobile network (PLMN), and interaction between network functions of the 5G core network and the EASDF occurs within one PLMN.

In a 5G network, if certain user equipment (such as any one of the user equipment 200a, the user equipment 200b, the user equipment 200c, and the user equipment 200n) intends to access a data network (DN), such as the Internet, the wireless application protocol (WAP), an intranet, outside the mobile communication network, the user equipment may initiate an access request, a base station may forward a service flow of the request of the user equipment to a core network element UPF in 5G Core (may be abbreviated as 5GC), the core network element UPF forwards the service flow to the external data network, and other core network elements in 5G Core are responsible for processing signaling and controlling the whole process.

Further, to obtain more efficient service delivery, edge computing may be adopted to meet different service needs. In an edge computing scene, one edge application service may be provided by a plurality of edge application servers (such as the edge application server 100a, the edge application server 100b, and the edge application server 100m in FIG. 1) usually deployed at different sites, and the plurality of edge application servers bearing the edge application service may use a single IP address or different IP addresses. Usually, a certain application may be deployed in a central application server or in an edge application server. To route a service flow of the application to an edge application server, the user equipment needs to know an IP address of an edge application server providing services for the application, the user equipment may perform discovery to obtain an IP address of a suitable edge application server (such as the nearest edge application server), so that traffic can be routed locally to the edge application server, and service latency, a traffic routing path, and user service experience can be optimized. Based on this, edge application server discovery is a process of finding the IP address of the suitable edge application server by the user equipment by using a domain name system. The domain name system (DNS) is a service of the Internet, which serves as a distributed database mapping domain names to IP addresses, and enables users to more conveniently access the Internet.

The 5G core network supports a PDU connection service between the user equipment and the data network. The PDU connection service is embodied in the form of a PDU session, and one PDU session refers to one process of communication between the user equipment and the data network. That is, after the PDU session is established, a data transmission channel between the user equipment and the data network is established. It is necessary to forward all core network data through the core network element I-UPF and then transmit the core network data to the external network. In other words, the connection of a data transmission channel corresponding to one PDU session is actually that the user equipment is connected to the core network element I-UPF, and the core network element I-UPF is simultaneously connected to the data network. In a case that a plurality of PDU sessions are established, data needs to be forwarded through the core network element I-UPF. To relieve the data transmission pressure of the core network, in a case that the establishment of a new PDU session of the user equipment needs to access the data network, a core network element SMF may interact with a core network element EASDF multiple times, so that the core network element EASDF may correctly process a DNS request and a DNS response message, and the core network element SMF may insert a core network element L-PSA UPF into the core network element I-UPF to establish an offloading path and configure an offloading rule so as to realize local offloading of data traffic. The core network element L-PSA UPF may sink to be deployed at a network edge to reduce transmission latency, thereby alleviating the data transmission pressure of the core network and improving the network data processing efficiency.

It will be appreciated that for services with ultra-large bandwidths, mobile edge computing (such as the edge application server shown in FIG. 1) is nearby deployed to realize nearby processing of traffic with an ultra-large bandwidth, so that the impact of a large bandwidth on a backbone network can be greatly reduced. Typical scenes include live streaming of a match in a stadium, living streaming of a concert, mobile content distribution, and the like.

Offloading paths configured by the core network element SMF for IP addresses of different edge application servers may be different, and a plurality of core network elements L-PSA UPFs may be inserted into the core network element I-UPF for one PDU session to perform local offloading. However, when acquiring an edge application service, the user equipment only needs to occupy an offloading path corresponding to one IP address, resulting in waste of network resources. Therefore, in the embodiments of this application, after IP addresses of at least two suitable edge application servers are acquired, a target data network access identifier (DNAI) may be selected through the core network element SMF or the core network element EASDF, and then an IP address of an edge application server having a mapping relationship with the target data network access identifier is selected from the IP addresses of the at least two suitable edge application servers as an IP address of an offloading edge application server. The data network access identifier (DNAI) refers to an identifier for a user plane to access a DN deployed with one or more application programs. Then, the core network element SMF only needs to generate an offloading rule for the core network element I-UPF according to the IP address of the offloading edge application server, and selects the core network element L-PSA UPF corresponding to the target data network access identifier and the core network element I-UPF to establish an offloading path associated with the IP address of the offloading edge application server. It will be appreciated that the core network element EASDF also only needs to transmit the IP address of the offloading edge application server to the user equipment, and the user equipment may access the corresponding edge application server via the IP address of the offloading edge application server to acquire an edge application service.

It will be appreciated that the foregoing user equipment applicable to edge computing may include terminal application products in civil, commercial, industrial, military and other fields, such as a smart phone, a tablet computer, a notebook computer, a palmtop computer, a mobile Internet device (MID), a wearable device (such as a smart watch and a smart bracelet), a smart computer, a smart car, a smart home, an unmanned aerial vehicle, an automatic teller machine (ATM), a camera, a traffic light, a generator, and various types of sensors. The edge application server may be an independent physical server, may also be a server cluster or distributed system composed of a plurality of physical servers, and may also be a cloud server providing a basic cloud computing service such as a cloud database, a cloud service, cloud computing, a cloud function, cloud storage, a network service, cloud communication, a middleware service, a domain name service, a security service, a content delivery network (CDN), and a big data and artificial intelligence platform. The user equipment may be directly or indirectly connected to the edge application server in a wired or wireless manner, which is not defined herein.

Referring to FIG. 2a to FIG. 2c together, FIG. 2a to FIG. 2c are schematic diagrams of scenes of a data processing method according to embodiments of this application, and the data processing method is mainly performed in a 5G core network. The embodiments of this application are described by taking a case where one user equipment initiates one protocol data unit session to acquire an edge application service as an example. As shown in FIG. 2a, if user equipment 301 (which may be any user equipment in the foregoing terminal cluster shown in FIG. 1) initiates a protocol data unit session establishment request 3001 (that is, the PDU session establishment request in the foregoing embodiment corresponding to FIG. 1) to a core network 300, and a session management function 300a (that is, the core network element SMF in the foregoing embodiment corresponding to FIG. 1) may respond to the protocol data unit session establishment request 3001, acquire edge application server deployment information through PDU session related policy information provided by a policy control function (that is, the core network element PCF in the foregoing embodiment corresponding to FIG. 1), and select a corresponding edge application server discovery function (that is, the core network element EASDF in the foregoing embodiment corresponding to FIG. 1) according to a related rule. If the session management function 300a selects an edge application server discovery function 300b, a connection may be established between the session management function 300a and the edge application server discovery function 300b. After the session management function 300a and the edge application server discovery function 300b are connected and complete data interaction related to the protocol data unit session establishment, the user equipment 301 may initiate a domain name system query request 3002. The domain name system query request 3002 is used for querying and acquiring an address (that is, the foregoing IP address of the edge application server in FIG. 1) of an edge application server providing an edge application service required by the user equipment 301. The edge application server discovery function 300b performs data interaction with a domain name system server 302 according to the domain name system query request 3002, and then receives a domain name system response message 3003 transmitted by the domain name system server 302. The domain name system response message 3003 includes a suitable edge application server address set 3004. The edge application server address set 3004 may include at least two edge application server addresses.

As shown in FIG. 2a, the edge application server address set 3004 may include an edge application server address A1, an edge application server address A2, an edge application server address B1, an edge application server address C1, and an edge application server address C2. Edge application servers corresponding to different edge application server addresses may be located on different edge computing platforms. Therefore, data networks (that is, corresponding data network access identifiers) where the edge application servers are located may be different. To facilitate understanding, it is assumed that a data network access identifier corresponding to the edge application server address A1 and the edge application server address A2 is A, a data network access identifier corresponding to the edge application server address B1 is B, and a data network access identifier corresponding to the edge application server address C1 and the edge application server address C2 is C.

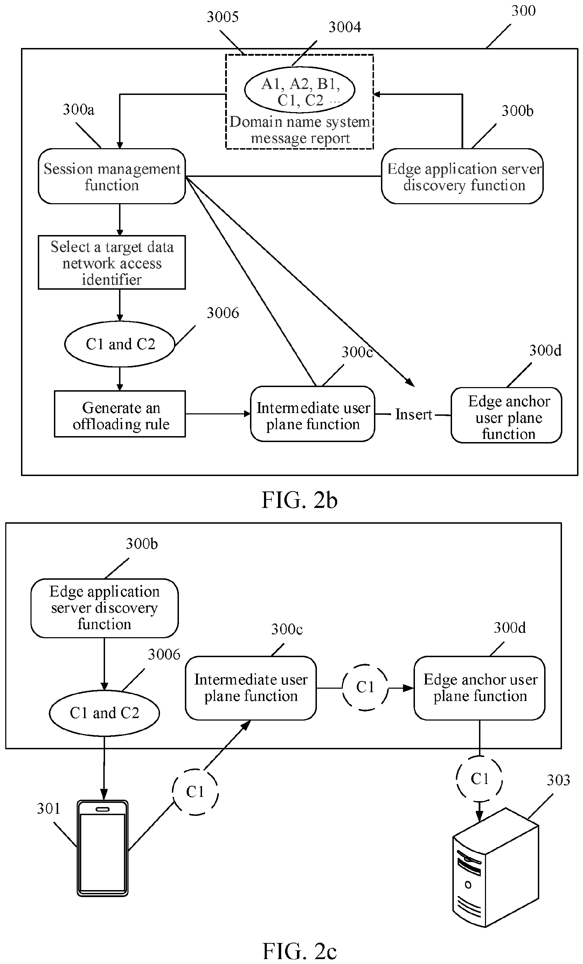

Further, referring to FIG. 2b together, the edge application server discovery function 300b will transmit a domain name system message report 3005 carrying the edge application server address set 3004 to the session management function 300a. After receiving the domain name system message report 3005, the session management function 300a needs to first select an edge application server address from the edge application server address set 3004 to acquire some edge application server addresses as offloading edge application server addresses. As shown in FIG. 2b, the session management function 300a may first select a target data network access identifier, and then the session management function 300a will select an edge application server address having a mapping relationship with the target data network access identifier from the at least two edge application server addresses as an offloading edge application server address. If the target data network access identifier is C, an offloading edge application server address set 3006 includes an offloading edge application server address C1 and an offloading edge application server address C2, and then the session management function 300a generates an offloading rule according to the offloading edge application server addresses in the offloading edge application server address set 3006 and delivers the offloading rule to an intermediate user plane function 300c (that is, the core network element I-UPF in the foregoing embodiment corresponding to FIG. 1). Meanwhile, the session management function 300a may insert an edge anchor user plane function 300d (that is, the core network element L-PSA UPF in the foregoing embodiment corresponding to FIG. 1) into the intermediate user plane function 300c. The edge anchor user plane function 300d is an edge anchor user plane function corresponding to the target data network access identifier, that is, the session management function 300a may establish an offloading path between the intermediate user plane function 300c and the edge anchor user plane function 300d. The offloading path is used for offloading service flows corresponding to the offloading edge application server address C1 and the offloading edge application server address C2. In other words, the user equipment may access an edge application server corresponding to the offloading edge application server address C1 or the offloading edge application server address C2 via the offloading path.

Further, referring to FIG. 2c together, after the offloading rule is delivered and the offloading path is established, the edge application server discovery function 300b will deliver the offloading edge application server address C1 and the offloading edge application server address C2 in the offloading edge application server address set 3006 together to the user equipment 301, and the user equipment 301 may select any one offloading edge application server address from the offloading edge application server address set 3006 as a service access address to access an edge application server corresponding to the offloading edge application server address so as to obtain an edge application service. If the offloading edge application server address C1 corresponds to an edge application server 303, after a service access request, carrying the offloading edge application server address C1, of the user equipment 301 reaches the intermediate user plane function 300c, the intermediate user plane function 300c recognizes the offloading edge application server address C1 carried in the service access request, and forwards the service access request to the edge anchor user plane function 300d according to the offloading rule and the offloading path, and finally the edge anchor user plane function 300d transmits the service access request to the edge application server 303. The service access request is used for acquiring an edge application service. It will be appreciated that in a case that the access of the user equipment 301 to the edge application server 303 fails, the user equipment 301 may take the offloading edge application server address C2 as a service access address, and initiate a service access request carrying the offloading edge application server address C2. After the service access request carrying the offloading edge application server address C2 reaches the intermediate user plane function 300c, the intermediate user plane function 300c will also forward the service access request to the edge anchor user plane function 300d, and then the edge anchor user plane function 300d will forward the service access request to an edge application server corresponding to the offloading edge application server address C2.

Only core network elements (including the SMF, the EASDF, the I-UPF, and the L-PSA UPF) that are closely related to the embodiments of this application are described in the data processing method shown in FIG. 2a to FIG. 2c, and other core network elements, such as an access and mobility management function (AMF), a base station, and a policy control function (PCF), are also involved in an actual service scene, which will not be described in detail herein.

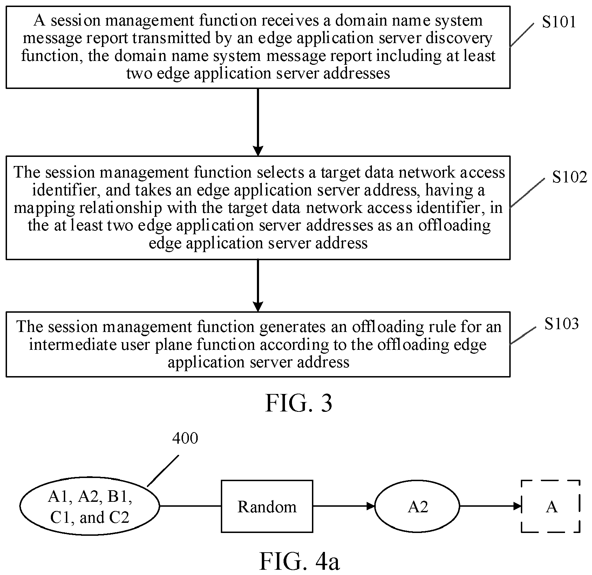

Referring to FIG. 3, FIG. 3 is a schematic flowchart of a data processing method according to an embodiment of this application. The data processing method may be performed by a session management function (SMF). As shown in FIG. 3, the data processing method may include at least the following steps S101 to S103.

Step S101: The session management function receives a domain name system message report transmitted by an edge application server discovery function, the domain name system message report including at least two edge application server addresses.

Specifically, to start an edge application service (EAS), user equipment needs to first know an edge application server address of an edge application server providing the edge application service. After a domain name system query request (DNS Query) of the user equipment is transmitted to the edge application server discovery function, the edge application server discovery function may query a domain name system server for a suitable edge application server address. After responding to the domain name system query request of the edge application server discovery function, the domain name system server may notify at least two edge application server addresses to the edge application server discovery function. The edge application server address may be an Internet Protocol (IP) address interconnected between networks and any other information that can be used for identifying a node in an edge application server, such as an IP address. It will be appreciated that edge application servers respectively corresponding to the at least two edge application server addresses may independently provide the edge application service for the user equipment.

Step S102: The session management function selects a target data network access identifier, and takes an edge application server address, having a mapping relationship with the target data network access identifier, in the at least two edge application server addresses as an offloading edge application server address.

Specifically, data network access identifiers corresponding to the edge application server addresses of the at least two edge application servers may be different. The data network access identifier (DNAI) refers to an identifier for a user plane to access a data network (DN) deployed with one or more application programs. One data network access identifier may correspond to one or more edge anchor user plane functions (L-PSA UPFs), and edge anchor user plane functions corresponding to different data network access identifiers may be different. Offloading of edge application server addresses corresponding to the same data network access identifier may be realized through an edge anchor user plane function corresponding to the data network access identifier. Therefore, only the edge application server address, corresponding to the target data network access identifier, in the at least two edge application server addresses may be taken as the offloading edge application server address.

Specifically, before the method according to the embodiments of this application is performed, a mapping relationship between an edge application server address and a data network access identifier may be written into a pre-configured information table. Then, when receiving at least two edge application server addresses, the session management function may search a data network access identifier having a mapping relationship with each edge application server address in the pre-configured information table according to the pre-configured information table as a data network access identifier to be selected, and then acquire a target data network access identifier from the data network access identifiers to be selected according to a pre-set selection rule. The selection rule may be random selection, alternate selection, payload sharing, and the like.

Step S103: The session management function generates an offloading rule for an intermediate user plane function according to the offloading edge application server address.

Specifically, the offloading rule may also be referred to as an offloading policy, and the session management function controls the intermediate user plane function to perform the processing of a service flow by configuring various offloading policies.

Optionally, after generating the offloading rule according to the offloading edge application server address, the session management function may establish an offloading path between the intermediate user plane function and an edge anchor user plane function corresponding to the target data network access identifier. Then, the session management function may deliver the offloading rule to the intermediate user plane function, and the intermediate user plane function forwards a service access request from the user equipment for accessing the offloading edge application server address based on the offloading rule and the offloading path to the edge anchor user plane function. Then, the edge anchor user plane function may forward the service access request to the edge application server corresponding to the offloading edge application server address. It will be appreciated that one target data network access identifier may correspond to one or more edge anchor user plane functions. The session management function may configure an uplink classifier (UL CL) corresponding to the edge anchor user plane function on the intermediate user plane function to provide a capability interface for supporting the offloading rule. The offloading rule includes traffic detection and traffic forwarding rules, and the offloading rule corresponding to the offloading edge application server address may be configured to offload traffic of which a destination address is the offloading edge application server address to the edge anchor user plane function and finally transmit the traffic to the edge application server. The UL CL may forward a service flow of the user equipment to the edge anchor user plane function according to the traffic detection and traffic forwarding rules. The UL CL is configured, and the offloading path between the intermediate user plane function and the edge anchor user plane function is established.

Optionally, after establishing the offloading path and successfully delivering the offloading rule, the session management function may transmit the offloading edge application server address to the edge application server discovery function, and then the edge application server discovery function transmits the offloading edge application server address to the user equipment, so that the user equipment may select one offloading edge application server address from the offloading edge application server addresses as a service access address. A service access request from the user equipment for the service access address may be transmitted to an edge application server corresponding to the service access address via the foregoing offloading path.

Further, to facilitate understanding of the foregoing process of selection of the target data network access identifier in step S 102, referring to FIG. 4a to FIG. 4c together, FIG. 4a to FIG. 4c are schematic diagrams of scenes of selection of a target data network access identifier according to embodiments of this application. It is assumed that an edge application server address set 400 acquired by the session management function includes an edge application server address A1, an edge application server address A2, an edge application server address B1, an edge application server address C1, and an edge application server address C2.

In one possible embodiment, a specific process of selecting a target data network access identifier by the session management function may be as follows. The session management function acquires a target edge application server address from at least two edge application server addresses. Then, the session management function takes a data network access identifier having a mapping relationship with the target edge application server address as a target data network access identifier. As shown in FIG. 4a, the session management function may randomly select one edge application server address from the edge application server address set 400. For example, the edge application server address A2 (that is, the target edge application server address) is acquired by a random function. Then, the session management function may determine that a data network access identifier having a mapping relationship with the edge application server address A2 is a data network access identifier A, and use the data network access identifier A as the target data network access identifier.

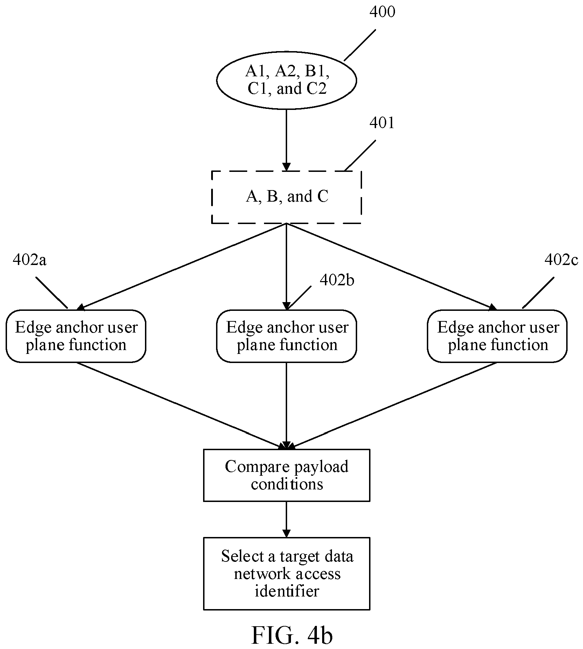

In one possible embodiment, a specific process of selecting a target data network access identifier by the session management function may be as follows. The session management function acquires data network access identifiers respectively having a mapping relationship with at least two edge application server addresses to obtain one or more data network access identifiers to be selected. The session management function queries a payload condition of an edge anchor user plane function respectively corresponding to the one or more data network access identifiers to be selected. The session management function determines a target data network access identifier from the one or more data network access identifiers to be selected according to the payload condition. As shown in FIG. 4b, the session management function queries a data network access identifier having a mapping relationship with each edge application server address in sequence to obtain a to-be-selected data network access identifier set 401. The to-be-selected data network access identifier set 401 includes a data network access identifier to be selected A, a data network access identifier to be selected B, and a data network access identifier to be selected C. Then, the session management function may find out an edge anchor user plane function 402a corresponding to the data network access identifier to be selected A, an edge anchor user plane function 402b corresponding to the data network access identifier to be selected B, and an edge anchor user plane function 402c corresponding to the data network access identifier to be selected C, determine a payload condition corresponding to each edge anchor user plane function by querying a historical offloading rule, a current offloading path connection state, and the like, perform comparison, and finally select a data network access identifier to be selected corresponding to an edge anchor user plane function with the optimal payload condition as a target data network access identifier.

In one possible embodiment, a specific process of selecting a target data network access identifier by the session management function may be as follows. The session management function acquires data network access identifiers respectively having a mapping relationship with at least two edge application server addresses to obtain one or more data network access identifiers to be selected. The session management function may acquire a predicted average payload condition of an edge anchor user plane function respectively corresponding to the one or more data network access identifiers to be selected within a target time period. Then, the session management function determines a target data network access identifier from the one or more data network access identifiers to be selected according to the predicted average payload condition. That is, the session management function may query the predicted average payload condition corresponding to the edge anchor user plane function, and then selects a data network access identifier to be selected corresponding to an edge anchor user plane function with the optimal predicted average payload condition as a target data network access identifier. The predicted average payload condition refers to an average payload condition of the edge anchor user plane function within a target time period (that is, within a future time period such as the next ten minutes and the next hour).

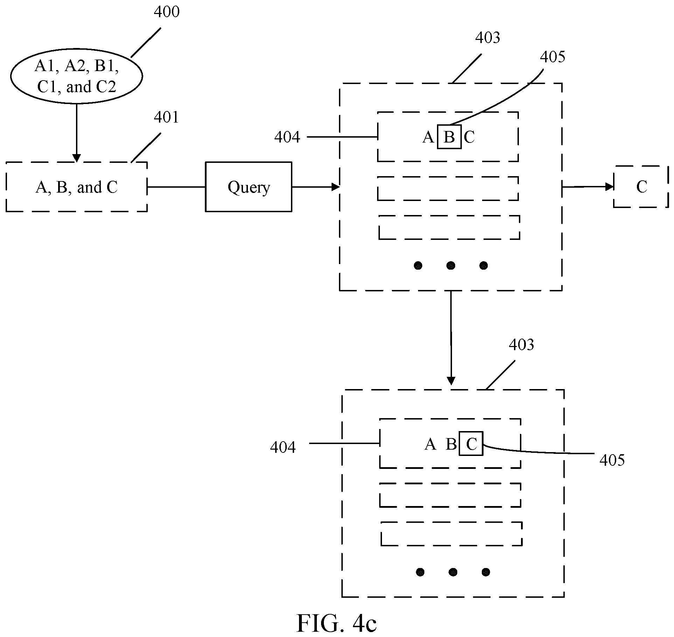

In one possible embodiment, a specific process of selecting a target data network access identifier by the session management function may be as follows. The session management function acquires data network access identifiers respectively having a mapping relationship with at least two edge application server addresses to obtain one or more data network access identifiers to be selected. The session management function determines a target data network access identifier from the one or more data network access identifiers to be selected according to a polling mechanism. As shown in FIG. 4c, the session management function may include a polling table set 403. The polling table set 403 includes a plurality of polling tables such as a polling table 404, and one polling table includes data network access identifiers to be selected with a polling sequence and a previously selected target data network access identifier marker. As shown in FIG. 4c, the session management function will query the polling table set 403 to acquire the polling table 404 corresponding to the to-be-selected data network access identifier set 401. A polling sequence in the polling table 404 is A→B→C→A .... In this case, a data network access identifier to be selected that is marked by a target data network access identifier marker 405 is the data network access identifier to be selected B, which indicates that a previously selected target data network access identifier is the data network access identifier to be selected B. Therefore, the session management function takes the data network access identifier to be selected C following the data network access identifier to be selected B as the target data network access identifier according to the polling sequence. It will be appreciated that after selecting the target data network access identifier, the session management function may update the target data network access identifier marker 405, that is, mark the data network access identifier to be selected C with the target data network access identifier marker 405.

According to the method provided in the embodiments of this application, after acquiring a domain name system message report including at least two edge application server addresses, the session management function may select a target data network access identifier, take an edge application server address, having a mapping relationship with the target data network access identifier, in the received at least two edge application server addresses as an offloading edge application server address, generate an offloading rule for the intermediate user plane function based on the offloading edge application server address, and establishes an offloading path for the offloading edge application server address on the intermediate user plane function instead of establishing offloading paths corresponding to all the edge application server addresses, which can reduce the waste of network resources and reduce the burden of the core network supporting a plurality of offloading paths simultaneously.

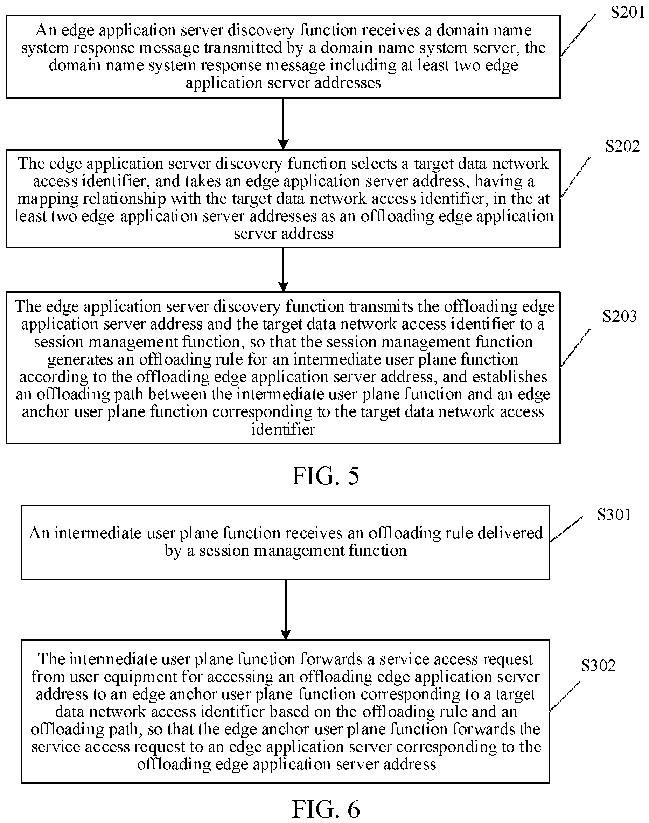

Further, referring to FIG. 5, FIG. 5 is a schematic flowchart of a data processing method according to an embodiment of this application. The data processing method may be performed by an edge application server discovery function (EASDF). As shown in FIG. 5, the data processing method may include at least the following steps S201 to S203.

Step S201: The edge application server discovery function receives a domain name system response message transmitted by a domain name system server, the domain name system response message including at least two edge application server addresses.

Specifically, after acquiring a domain name system query request transmitted by user equipment, the edge application server discovery function interacts with the domain name system server, and then receives a domain name system response message transmitted by the domain name system server. The domain name system query request is used for acquiring an edge application server address of an edge application server providing an edge application service to be started by the user equipment.

Step S202: The edge application server discovery function selects a target data network access identifier, and takes an edge application server address, having a mapping relationship with the target data network access identifier, in the at least two edge application server addresses as an offloading edge application server address.

Specifically, after receiving the domain name system response message, the edge application server discovery function will first select a target data network access identifier, and then select and determine an offloading edge application server address from the at least two edge application server addresses in the domain name system response message according to the target data network access identifier. It will be appreciated that a specific implementation process of selecting a target data network access identifier, and taking an edge application server address, having a mapping relationship with the target data network access identifier, in the at least two edge application server addresses as an offloading edge application server address by the edge application server discovery function may be the same as the specific implementation process of selecting an offloading edge application server address by the session management function in the foregoing embodiment corresponding to FIG. 3. In other words, the foregoing selection of a target data network access identifier in FIG. 4a to FIG. 4c may be performed in the edge application server discovery function, which will not be described in detail here.

Step S203: The edge application server discovery function transmits the offloading edge application server address and the target data network access identifier to a session management function, so that the session management function generates an offloading rule for an intermediate user plane function according to the offloading edge application server address, and establishes an offloading path between the intermediate user plane function and an edge anchor user plane function corresponding to the target data network access identifier.

Specifically, the edge application server discovery function transmits the offloading edge application server address and the target data network access identifier only to the session management function instead of transmitting all the edge application server addresses included in the domain name system response message to the session management function. The session management function does not need to perform selection on the received offloading edge application server addresses any more, directly generates an offloading rule for the intermediate user plane function according to the target data network access identifier having a mapping relationship with the offloading edge application server address and the offloading edge application server address, and establishes an offloading path between the intermediate user plane function and the edge anchor user plane function corresponding to the target data network access identifier. Then, the edge application server discovery function transmits the offloading edge application server address to the user equipment after the offloading rule is generated and the offloading path is established.

According to the method provided in the embodiments of this application, the process of selection of the target data network access identifier may be implemented by the edge application server discovery function. The edge application server discovery function may directly select an offloading edge application server address from the at least two edge application server addresses included in the domain name system response message according to the target data network access identifier, and then transmit the offloading edge application server address and the target data network access identifier to the session management function. The session management function only generates an offloading rule according to the offloading edge application server address, and establishes an offloading path between the intermediate user plane function and the edge anchor user plane function corresponding to the target data network access identifier, which can reduce the waste of network resources and reduce the burden of the core network supporting a plurality of offloading paths simultaneously.

Further, referring to FIG. 6, FIG. 6 is a schematic flowchart of a data processing method according to an embodiment of this application. The data processing method may be performed by an intermediate user plane function (I-UPF). As shown in FIG. 3, the data processing method may include at least the following steps S301 to S303.

Step S301: The intermediate user plane function receives an offloading rule delivered by a session management function.

Specifically, the offloading rule is generated according to an offloading edge application server address, and the offloading rule is used for forwarding a service access request from user equipment for accessing the offloading edge application server address to an edge anchor user plane function corresponding to a target data network access identifier. The target data network access identifier is selected and obtained by the session management function after receiving a domain name system message report transmitted by an edge application server discovery function. The domain name system message report includes at least two edge application server addresses. The offloading edge application server address refers to an edge application server address, having a mapping relationship with the target data network access identifier, in the at least two edge application server addresses.

Step S302: The intermediate user plane function forwards the service access request from the user equipment for accessing the offloading edge application server address to the edge anchor user plane function corresponding to the target data network access identifier based on the offloading rule and an offloading path, so that the edge anchor user plane function forwards the service access request to an edge application server corresponding to the offloading edge application server address.

Specifically, the offloading path is an offloading path between an intermediate user plane function and the edge anchor user plane function corresponding to the target data network access identifier that is established by the session management function.

Specifically, a process of forwarding the service access request from the user equipment for accessing the offloading edge application server address to the edge anchor user plane function corresponding to the target data network access identifier based on the offloading rule and the offloading path by the intermediate user plane function may be as follows. The intermediate user plane function receives a target service access request transmitted by the user equipment. The target service access request carries a target edge application server address. In a case that the intermediate user plane function finds out an edge application server address that is the same as the target edge application server address from the offloading edge application server addresses, the intermediate user plane function forwards the target service access request to the edge anchor user plane function corresponding to the target data network access identifier based on the offloading rule and the offloading path, so that the edge anchor user plane function forwards the target service access request to an edge application server corresponding to the target edge application server address. In other words, after the intermediate user plane function receives the target service access request of the user equipment, a UL CL decides whether to forward the target service access request to a corresponding edge anchor user plane function according to a flow filtering rule (for example, checking a destination IP address/prefix of the target service access request transmitted by the user equipment), and forwards the target service access request to the edge anchor user plane function in a case that it is determined that the target service access request is transmitted to the offloading edge application server address.

Specifically, the edge application server corresponding to the offloading edge application server address is configured to provide an edge application service for the user equipment. There are at least two offloading edge application server addresses, and the at least two offloading edge application server addresses include a first offloading edge application server address and a second offloading edge application server address. The second offloading edge application server address is an edge application server address that is carried in a service access request initiated by the user equipment after the access to the edge application service via the first offloading edge application server address fails. To facilitate understanding, if available offloading edge application server addresses received by the user equipment include an offloading edge application server address E1, an offloading edge application server address E2, and an offloading edge application server address E3, the user equipment may randomly acquire one offloading edge application server address, such as the offloading edge application server address E1, as a target edge application server address, and initiate a service access request for an edge application server corresponding to the offloading edge application server address E1 to acquire an edge application service. However, due to a network problem and the like, the user equipment fails to access the edge application server corresponding to the offloading edge application server address E1. The user equipment may select a new target edge application server address, such as the offloading edge application server address E3, from the received offloading edge application server addresses that are not selected, and initiate a service access request for an edge application server corresponding to the offloading edge application server address E3 to acquire an edge application service.

In the embodiments of this application, it is unnecessary to insert a plurality of uplink classifiers into the intermediate user plane function to establish a plurality of offloading paths associated with edge application server addresses, thereby reducing the waste of network resources.

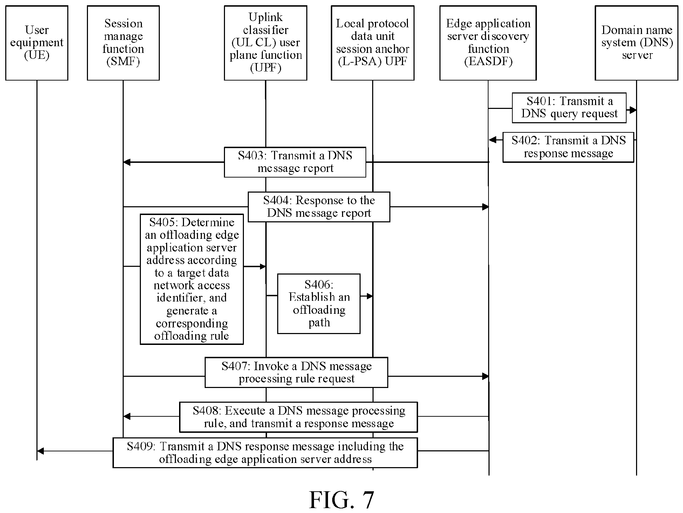

Further, referring to FIG. 7, FIG. 7 is a schematic interaction diagram of discovery of an edge application server according to an embodiment of this application. As shown in FIG. 7, the whole interaction process mainly involves user equipment (UE), a session management function (SMF), an edge application server discovery function (EASDF), a domain name system (DNS) server, a user plane function (UPF, that is, an intermediate user plane function (I-UPF)) into which an uplink classifier (UL CL) can be inserted, and a local PDU session anchor (L-PSA) user plane function (UPF) (L-PSA UPF, that is, an edge anchor user plane function). As shown in FIG. 7, the interaction process includes the following steps.

Step S401: The EASDF transmits a DNS query request (DNS Query) to the DNS server.

Specifically, the DNS query request is a query request transmitted by the UE to the EASDF, and is a query request initiated by the UE in order to acquire an IP address of an edge application server capable of providing an edge application service. The EASDF may add an extension mechanism for DNS client subnet (ECS) option to the DNS Query and transmit the DNS Query to the DNS server.

Step S402: The DNS server transmits a DNS response message (DNS Responses) to the EASDF.

Specifically, the EASDF may receive the DNS Responses from the DNS server and determine that the DNS Response may be transmitted to the UE. The DNS Response may include a plurality of IP addresses of edge application servers capable of providing required edge application services for the UE, that is, a plurality of EAS IP addresses.

Step S403: The EASDF transmits a DNS message report to the SMF.

Specifically, in a case that the EAS IP addresses or fully qualified domain names (FQDNs) in the DNS response message are matched with the reporting conditions provided by the SMF, the EASDF may transmit a DNS message report to the SMF by invoking a Neasdf_DNSContext_Notify service (a DNS context notification service of the EASDF) including EAS information. The DNS message report includes the plurality of EAS IP addresses received by the EASDF. According to a DNS message processing rule, the EASDF does not transmit the DNS response message to the UE at this time, but waits for an instruction of the SMF (see step S406), that is, caches the DNS response message first. Unless otherwise specified, names of services, such as Neasdf_DNSContext_Notify, provided by the EASDF are not defined herein.

Step S404: The SMF responds to the DNS message report.

Specifically, the SMF invokes a Neasdf_DNSContext_Notify response.

Step S405: The SMF determines an offloading address according to a target data network access identifier (DNAI), and generates a corresponding offloading rule.

Specifically, after acquiring the EAS IP addresses in the DNS message report, the SMF will select one DNAI as a target DNAI, and then acquire an EAS IP address having a mapping relationship with the target DNAI as an offloading edge application server address (that is, the offloading edge application server address in the foregoing embodiment corresponding to FIG. 3) according to a mapping relationship between the target DNAI and the EAS IP address. A process of selection of the target DNAI may refer to the detailed description of step S 102 in the foregoing embodiment corresponding to FIG. 3, which will not be described in detail here. Optionally, the process of selection of the target DNAI may also be performed in step S403. In this case, the DNS message report transmitted by the EASDF to the SMF includes the target DNAI and the EAS IP address having a mapping relationship with the target DNAI only. A specific implementation may refer to step S202 in the foregoing embodiment corresponding to FIG. 5, which will not be described in detail here.

Then, the SMF may generate an offloading rule based on the offloading edge application server address and then transmit the offloading rule to the I-UPF. A process of generation of the offloading rule may refer to the description of step S 103 in the foregoing embodiment corresponding to FIG. 3, which will not be described in detail here.

S406: Establish an offloading path between the I-UPF and the L-PSA UPF.

Specifically, the SMF will determine that an uplink classifier (UL CL) that needs to be inserted into the I-UPF and corresponds to the target DNAI, and then configure the UL CL to establish an offloading path between the I-UPF and the L-PAS UPF. For details, reference may be made to the description of step S 103 in the foregoing embodiment corresponding to FIG. 3, which will not be described in detail here.

Step S407: The SMF invokes a DNS message processing rule and transmits a DNS message processing rule request to the EASDF.

Specifically, the SMF invokes a Neasdf_DNSContext_Update Request service request and transmits a DNS message processing rule request to the EASDF. The DNS message processing rule is used for instructing the EASDF to transmit the DNS response message cached in step S403 to the UE.

Step S408: The EASDF executes the DNS message processing rule and transmits a response message to the SMF.

Specifically, the EASDF invokes Neasdf DNSContext Update Response to response the SMF.

Step S409: The EASDF transmits a DNS response message including an offloading edge application server address to the UE.

Specifically, the EASDF transmits a DNS response message including an offloading edge application server address to the UE. The UE may access an offloading edge application server to acquire a corresponding edge application service, and a process of acquiring the edge application service by the UE may refer to step S303 in the foregoing embodiment corresponding to FIG. 6.

According to the method provided in the embodiments of this application, the SMF may take an EAS IP address having a mapping relationship with the target DNAI as an offloading edge application server address, and generate an offloading rule according to the offloading edge application server address only instead of establishing offloading paths for all available EAS IP addresses queried by the DNS server, thereby avoiding that offloading paths associated with EAS IP addresses that are not selected by the user equipment will be idle, and reducing the waste of network resources.

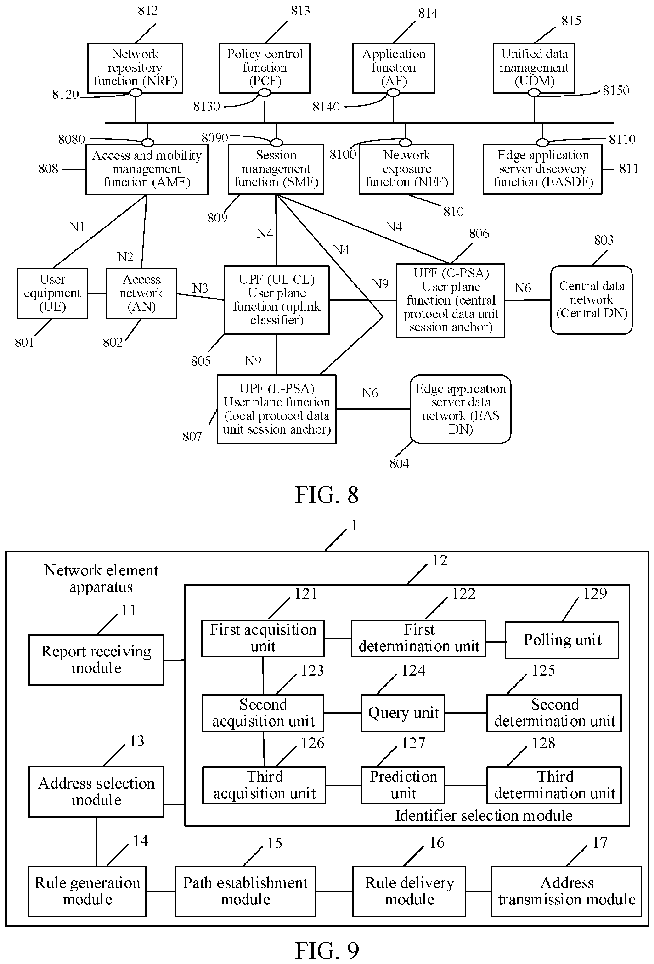

Further, referring to FIG. 8, FIG. 8 is a schematic diagram of a network architecture of an offloading path according to an embodiment of this application. As shown in FIG. 8, the network architecture involves user equipment (UE) 801, an access network (AN) 802, a plurality of functional network elements of a core network, a central data network (Central DN) 803, and an edge application server data network (EAS DN) 804. As shown in FIG. 8, the plurality of functional network elements of the core network may include: a user plane function 805 (that is, the foregoing intermediate user plane function (I-UPF)) into which an uplink classifier (UL CL) can be inserted, a central protocol data unit session anchor user plane function (C-PSA UPF) 806, a local protocol data unit session anchor user plane function (L-PSA UPF, that is, the foregoing edge anchor user plane function) 807, an access and mobility management function (AMF) 808, a session management function 809 (that is, the foregoing session management function), a network exposure function (NEF) 810, an edge application server discovery function 811 (that is, the foregoing edge application server discovery function), a network repository function (NRF) 812, a policy control function (PCF) 813, an application function (AF) 814, and a unified data management (UDM) 815.

The functional network elements of the core network may provide service-based interfaces, and a naming rule of the interface is to add N in front of the name of the functional body. The service-based interface is an interface of the functional body that is exposed to the outside and implemented through service registration and service discovery similar to a microservice-based architecture, the interface is only for a single functional body, and other functional bodies interact with the functional body via the exposed interface of the functional body. In fact, the mechanism provides a many-to-one access mechanism, and by adopting service registration and service discovery, the functional bodies can access each other without knowing mutually an address of the other body. As shown in FIG. 8, the access and mobility management function 808 provides a service-based interface 8080 (which may be referred to as Namf), the session management function 809 provides a service-based interface 8090 (which may be referred to as Nsmf), the network exposure function 810 provides a service-based interface 8100 (which may be referred to as Nnef), the edge application server discovery function 811 provides a service-based interface 8110 (which may be referred to as Neasdf), the network repository function 812 provides a service-based interface 8120 (which may be referred to as Nnrf), the policy control function 813 provides a service-based interface 8130 (which may be referred to as Npcf), the application function 814 provides a service-based interface 8140 (which may be referred to as Naf), and the unified data management 815 provides a service-based interface 8150 (which may be referred to as Nudm). The functional network element interacts with other functional network elements through the service-based interface.

The network architecture may also include a reference point, and the reference point is similar to a conventional interface, that is, a mutual access interface agreed between two different functional bodies. A reference point between two functional bodies may generally be replaced with one or more service-base interfaces to provide identical communication between user functional blocks through a more flexible and more scalable implementation. As shown in FIG. 8, a reference point N1 is an interface between the user equipment 801 and the access and mobility management function 808. A reference point N2 is an interface between the access network 802 and the access and mobility management function 808. A reference point N3 is an interface between the access network 802 and the user plane function 805 into which an uplink classifier can be inserted, and tunnelling of user data may be performed according to GTP-U (a tunnelling protocol). A reference point N4 is an interface between the session management function 809 and the user plane function 805 into which an uplink classifier can be inserted, is also an interface between the session management function 809 and the central protocol data unit session anchor user plane function 806, and is also an interface between the session management function 809 and the local protocol data unit session anchor user plane function 807. A reference point N6 is an interface between the central protocol data unit session anchor user plane function 806 and the central data network 803, is also an interface between the local protocol data unit session anchor user plane function 807 and the edge data network 804, can support a dedicated line or an L2/L3 layer tunnel, and may communicate with the DN based on an IP address. A reference point N9 is an interface between the central protocol data unit session anchor user plane function 806 and the user plane function 805 into which an uplink classifier can be inserted, and is also an interface between the local protocol data unit session anchor user plane function 807 and the user plane function 805 into which an uplink classifier can be inserted.

It will be appreciated that the service-based interfaces and the reference points are two different model-based interaction modes of network entities that are introduced by a 5G architecture, and a flexible processing method and a processing flow of the 5G network for various specific service types at various protocol layers are realized by flexibly defining interfaces and connections between network functional blocks and network entities. According to the foregoing network architecture, the user equipment 801 can access the edge data network 804 where the edge application server (EAS) is located.

In one possible embodiment, as shown in FIG. 8, the EASDF may query the DNS server for IP address of edge application servers available to the UE, and after receiving a plurality of IP addresses, the EASDF may first transmit the plurality of IP addresses to the SMF. After receiving the plurality of IP addresses, the SMF will determine a mapping relationship between each IP address and a DNAI according to pre-configured information, such as: DNAI#1: IP#1 and IP#2; DNAI#2: IP#3, IP#4, and IP#5. That is, DNAI#1 has a mapping relationship with IP#1 and IP#2, and DNAI#2 has a mapping relationship with IP#3, IP#4, and IP#5. The SMF may further determine a selected IP address according to the mapping relationships between the IP addresses and the DNAIs. A DNAI affects the selection of an I-UPF and an L-PSA UPF. Different DNAIs usually correspond to different L-PSA UPFs, so when service IP addresses received by the SMF correspond to a plurality of DNAIs, the SMF will select one target DNAI, and then select an IP address corresponding to the target DNAI as an offloading address. Thus, when establishing an offloading path for a user plane, the SMF only needs to select an L-PSA UPF supporting the target DNAI to establish the offloading path. The SMF may select all IP addresses corresponding to the target DNAI, take all these IP addresses as offloading addresses (that is, the foregoing offloading edge application server address, and all these IP addresses will be associated with an established offloading path) for the UE, and transmit the offloading addresses to the EASDF, and then the EASDF transmits the offloading addresses to the UE. When subsequently initiating service access, the UE may arbitrarily select one offloading address from these offloading addresses to perform the service access, and may select one offloading address from the remaining offloading addresses to initiate service access again in a case that the access to the service via the offloading address fails. Optionally, the SMF may select only one IP address corresponding to the target DNAI and configure the IP address as an offloading address for the UE.

In one possible embodiment, as shown in FIG. 8, the EASDF may query the DNS server for IP addresses of edge application servers available to the UE, and determine mapping relationships between IP addresses and DNAIs according to pre-configured information in a case that the EASDF receives a plurality of IP addresses returned by the DNS server. Then, the EASDF may select one target DNAI and select an IP address corresponding to the target DNAI. Thus, when an offloading path is established for a user plane, an L-PSA UPF supporting the target DNAI is selected to establish the offloading path. The EASDF will transmit the IP addresses corresponding to the target DNAI to the SMF. The SMF will take these IP addresses as offloading addresses (that is, the offloading edge application server address in the offloading rule for the I-UPF) for the UE, and after SMF configures the offloading addresses, the EASDF will transmit the offloading addresses corresponding to the target DNAI to the UE. When subsequently initiating service access, the UE may arbitrarily select one offloading address from these offloading addresses to perform the service access, and may select one offloading address from the remaining offloading addresses to initiate service access again in a case that the access to the service via the offloading address fails. Optionally, the EASDF may select only one IP address corresponding to the target DNAI as an offloading address for the UE.

According to the method provided in the embodiments of this application, at least two IP addresses are acquired, a target DNAI may be further selected, an IP address, having a mapping relationship with the target DNAI, in the at least two IP addresses is taken as an offloading address, and the session management function generates an offloading rule for the intermediate user plane function according to the offloading address. It can be seen that in the embodiments of this application, the session management function does not generate offloading rules for all the IP addresses, but determines an offloading address according to a selection mechanism, so that only an offloading path associated with the offloading address is established subsequently instead of establishing offloading paths associated with all the available IP addresses, thereby avoiding that offloading paths associated with IP addresses that are not selected by the user equipment will be idle, and reducing the waste of network resources.

Referring to FIG. 9, FIG. 9 is a schematic structural diagram of a network element apparatus according to an embodiment of this application. The network element apparatus may be a computer program (including program codes) running on a network element device. For example, the network element apparatus is application software. The apparatus may be configured to perform corresponding steps in the data processing method according to the embodiments of this application. As shown in FIG. 9, a network element apparatus 1 may include: a report receiving module 11, an identifier selection module 12, an address selection module 13, and a rule generation module 14.

The report receiving module 11 is configured to receive, by a session management function, a domain name system message report transmitted by an edge application server discovery function, the domain name system message report including at least two edge application server addresses.

The identifier selection module 12 is configured to select a target data network access identifier.

The address selection module 13 is configured to take an edge application server address, having a mapping relationship with the target data network access identifier, in the at least two edge application server addresses as an offloading edge application server address.

The rule generation module 14 is configured to generate an offloading rule for an intermediate user plane function according to the offloading edge application server address.

Specific implementations of functions of the report receiving module 11, the identifier selection module 12, the address selection module 13, and the rule generation module 14 may refer to steps S101 to S103 in the foregoing embodiment corresponding to FIG. 3, which will not be described in detail here.

Referring to FIG. 9, the identifier selection module 12 may include: a first acquisition unit 121 and a first determination unit 122.

The first acquisition unit 121 is configured to acquire a target edge application server address from the at least two edge application server addresses.

The first determination unit 122 is configured to determine a data network access identifier having a mapping relationship with the target edge application server address as a target data network access identifier.

Specific implementations of functions of the first acquisition unit 121 and the first determination unit 122 may refer to the description of the foregoing embodiment corresponding to FIG. 4a, which will not be described in detail here.

Referring to FIG. 9, the identifier selection module 12 may include: a second acquisition unit 123, a query unit 124, and a second determination unit 125.

The second acquisition unit 123 is configured to acquire data network access identifiers respectively having a mapping relationship with the at least two edge application server addresses to obtain one or more data network access identifiers to be selected.

The query unit 124 is configured to query a payload condition of an edge anchor user plane function respectively corresponding to the one or more data network access identifiers to be selected.

The second determination unit 125 is configured to determine a target data network access identifier from the one or more data network access identifiers to be selected according to the payload condition.

Specific implementations of functions of the second acquisition unit 123, the query unit 124, and the second determination unit 125 may refer to the description of the foregoing embodiment corresponding to FIG. 4b, which will not be described in detail here.

Referring to FIG. 9, the identifier selection module 12 may include: a third acquisition unit 126, a prediction unit 127, and a third determination unit 128.

The third acquisition unit 126 is configured to acquire data network access identifiers respectively having a mapping relationship with the at least two edge application server addresses to obtain one or more data network access identifiers to be selected.

The prediction unit 127 is configured to acquire a predicted average payload condition of an edge anchor user plane function respectively corresponding to the one or more data network access identifiers to be selected within a target time period.

The third determination unit 128 is configured to determine a target data network access identifier from the one or more data network access identifiers to be selected according to the predicted average payload condition.

Specific implementations of functions of the third acquisition unit 126, the prediction unit 127, and the third determination unit 128 may refer to the description of the foregoing embodiment corresponding to FIG. 4b, which will not be described in detail here.

Referring to FIG. 9, the identifier selection module 12 may include: a polling unit 129.

The polling unit 129 is configured to acquire data network access identifiers respectively having a mapping relationship with the at least two edge application server addresses to obtain one or more data network access identifiers to be selected.

The polling unit 129 is further configured to determine a target data network access identifier from the one or more data network access identifiers to be selected according to a polling mechanism.

A specific implementation of functions of the polling unit 129 may refer to the description of the foregoing embodiment corresponding to FIG. 4c, which will not be described in detail here.

Referring to FIG. 9, the foregoing network element apparatus 1 may further include: a path establishment module 15 and a rule delivery module 16.

The path establishment module 15 is configured to establish an offloading path between the intermediate user plane function and an edge anchor user plane function corresponding to the target data network access identifier.

The rule delivery module 16 is configured to deliver the offloading rule to the intermediate user plane function, so that the intermediate user plane function forwards a service access request from user equipment for accessing the offloading edge application server address to the edge anchor user plane function based on the offloading rule and the offloading path. The edge anchor user plane function is configured to forward the service access request to an edge application server corresponding to the offloading edge application server address.

Specific implementations of functions of the path establishment module 15 and the rule delivery module 16 may refer to the description of step S 103 in the foregoing embodiment corresponding to FIG. 3, which will not be described in detail here.

Referring to FIG. 9, the foregoing network element apparatus 1 may further include: an address transmission module 17.

The address transmission module 17 is configured to transmit the offloading edge application server address to the edge application server discovery function, so that the edge application server discovery function transmits the offloading edge application server address to the user equipment.

A specific implementation of functions of the address transmission module 17 may refer to the description of step S 103 in the foregoing embodiment corresponding to FIG. 3, which will not be described in detail here.

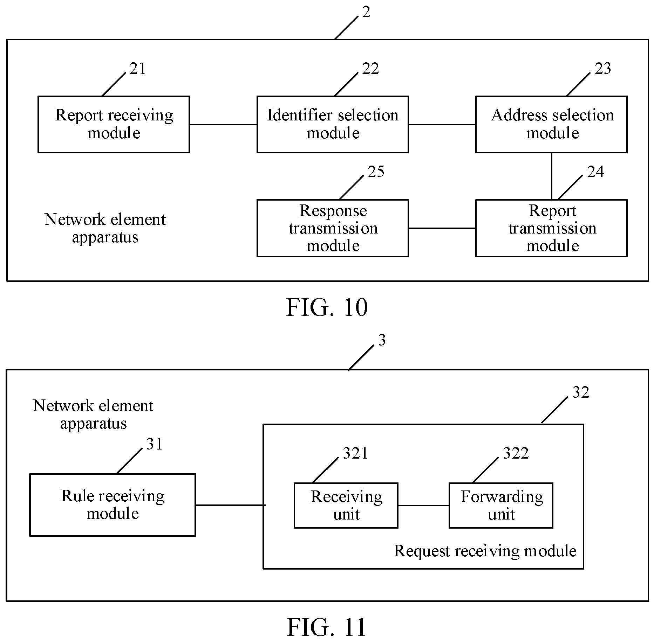

Referring to FIG. 10, FIG. 10 is a schematic structural diagram of a network element apparatus according to an embodiment of this application. The network element apparatus may be a computer program (including program codes) running on a network element device. For example, the network element apparatus is application software. The apparatus may be configured to perform corresponding steps in the data processing method according to the embodiments of this application. As shown in FIG. 10, a network element apparatus 2 may include: a receiving module 21, an identifier selection module 22, an address selection module 23, and a transmission module 24.

The receiving module 21 is configured to receive, by an edge application server discovery function, a domain name system response message transmitted by a domain name system server, the domain name system response message including at least two edge application server addresses.

The identifier selection module 22 is configured to select a target data network access identifier.

The address selection module 23 is configured to take an edge application server address, having a mapping relationship with the target data network access identifier, in the at least two edge application server addresses as an offloading edge application server address.

The transmission module 24 is configured to transmit the offloading edge application server address and the target data network access identifier to a session management function, so that the session management function generates an offloading rule for an intermediate user plane function according to the offloading edge application server address, and establishes an offloading path between the intermediate user plane function and an edge anchor user plane function corresponding to the target data network access identifier.

Specific implementations of functions of the receiving module 21, the identifier selection module 22, the address selection module 23, and the transmission module 24 may refer to the description of steps S201 to S203 in the foregoing embodiment corresponding to FIG. 5, which will not be described in detail here.

Referring to FIG. 10, the network element apparatus 2 may further include: a response transmission module 25.

The response transmission module 25 is configured to transmit the offloading edge application server address to user equipment after the offloading rule is generated and the offloading path is established.

A specific implementation of functions of the response transmission module 25 may refer to the description of step S203 in the foregoing embodiment corresponding to FIG. 5, which will not be described in detail here.

Referring to FIG. 11, FIG. 11 is a schematic structural diagram of a network element apparatus according to an embodiment of this application. The network element apparatus may be a computer program (including program codes) running on a network element device. For example, the network element apparatus is application software. The apparatus may be configured to perform corresponding steps in the data processing method according to the embodiments of this application. As shown in FIG. 11, a network element apparatus 3 may include: a rule receiving module 31.

The rule receiving module 31 is configured to receive, by an intermediate user plane function, an offloading rule delivered by a session management function, the offloading rule being generated according to an offloading edge application server address; the offloading rule being used for forwarding a service access request from user equipment for accessing the offloading edge application server address to an edge anchor user plane function corresponding to a target data network access identifier; the target data network access identifier being selected and obtained by the session management function after receiving a domain name system message report transmitted by an edge application server discovery function; and the domain name system message report including at least two edge application server addresses, and the offloading edge application server address referring to an edge application server address, having a mapping relationship with the target data network access identifier, in the at least two edge application server addresses.

Referring to FIG. 11, the foregoing network element apparatus 3 further includes: a request forwarding module 32.

The request forwarding module 32 is configured to forward the service access request from the user equipment for accessing the offloading edge application server address to the edge anchor user plane function corresponding to the target data network access identifier based on the offloading rule and an offloading path, so that the edge anchor user plane function forwards the service access request to an edge application server corresponding to the offloading edge application server address, the offloading path being an offloading path between the intermediate user plane function and the edge anchor user plane function corresponding to the target data network access identifier that is established by the session management function.

A specific implementation of functions of the request forwarding module 32 may refer to the description of step S302 in the foregoing embodiment corresponding to FIG. 6, which will not be described in detail here.

Referring to FIG. 11, the request forwarding module 32 may include: a receiving unit 321 and a forwarding unit 322.

The receiving unit 321 is configured to receive a target service access request transmitted by the user equipment, the target service access request carrying a target edge application server address.

The forwarding unit 322 is configured to forward the target service access request to the edge anchor user plane function corresponding to the target data network access identifier based on the offloading rule and the offloading path in a case that an edge application server address that is the same as the target edge application server address is found out from the offloading edge application server addresses, so that the edge anchor user plane function forwards the target service access request to an edge application server corresponding to the target edge application server address.

All the edge application servers corresponding to the foregoing offloading edge application server addresses are configured to provide edge application services for the user equipment. There are at least two offloading edge application server addresses, and the at least two offloading edge application server addresses include a first offloading edge application server address and a second offloading edge application server address. The second offloading edge application server address is an edge application server address that is carried in a service access request initiated by the user equipment after the access to the edge application service via the first offloading edge application server address fails.

Specific implementations of functions of the receiving unit 321 and the forwarding unit 322 may refer to the description of step S302 in the foregoing embodiment corresponding to FIG. 6, which will not be described in detail here.

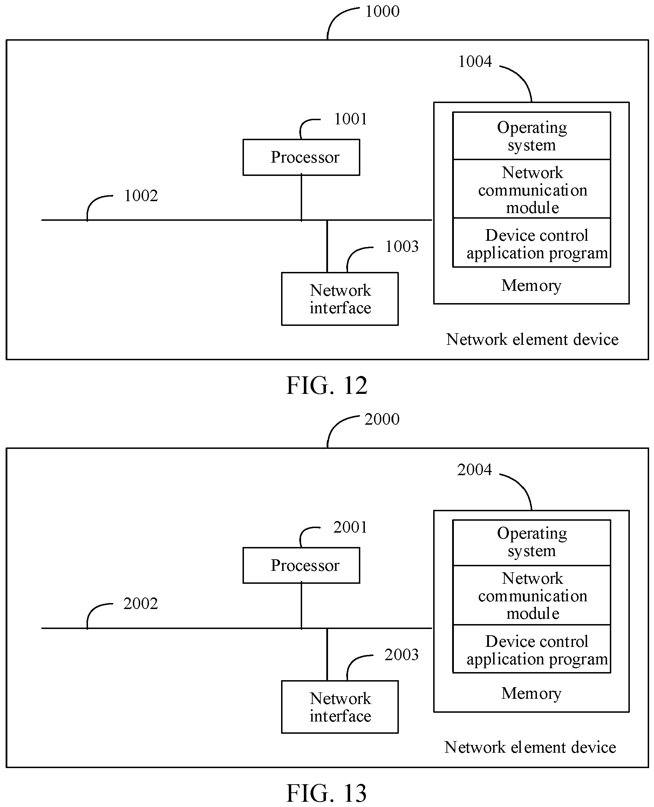

Referring to FIG. 12, FIG. 12 is a schematic structural diagram of a network element device according to an embodiment of this application. As shown in FIG. 12, a network element device 1000 may include: a processor 1001, a network interface 1003, and a memory 1004. In addition, the foregoing network element device 1000 may further include: at least one communication bus 1002. The communication bus 1002 is configured to realize connection and communication between these components. The network interface 1003 may optionally include standard wired interface and wireless interface (such as a WI-FI interface). The memory 1004 may be a high-speed random access memory (RAM) or may also be a non-volatile memory, such as at least one disk memory. The memory 1004 may optionally also be at least one storage apparatus away from the foregoing processor 1001. As shown in FIG. 12, the memory 1004, as a computer-readable storage medium, may include an operating system, a network communication module, and a device control application program. In the embodiments of this application, the network element device 1000 may be a session management function.

In the network element device 1000 shown in FIG. 12, the network interface 1003 may provide a network communication function. The processor 1001 may be configured to invoke the device control application program stored in the memory 1004 to cause the network element device 1000 to perform:
receiving a domain name system message report transmitted by an edge application server discovery function, the domain name system message report including at least two edge application server addresses;
selecting a target data network access identifier, and taking an edge application server address, having a mapping relationship with the target data network access identifier, in the at least two edge application server addresses as an offloading edge application server address; and
generating an offloading rule for an intermediate user plane function according to the offloading edge application server address.

It is to be understood that the network element device 1000 described in the embodiments of this application may implement the description of the data processing method in the foregoing embodiment corresponding to FIG. 3, which will not be described in detail here. In addition, the beneficial effects of using the same method will not be described in detail here.

Furthermore, the embodiments of this application also provide a computer-readable storage medium, which stores a computer program executed by the foregoing network element apparatus 1. The foregoing computer program includes program instructions that, when executed by the foregoing processor, are able to implement the description of the foregoing data processing method in the foregoing embodiment corresponding to FIG. 3, which will not be described in detail here. In addition, the beneficial effects of using the same method will not be described in detail here. For technical details that are not disclosed in the embodiments of the computer-readable storage medium involved in this application, reference is made to the description of the method embodiments of this application.

Referring to FIG. 13, FIG. 13 is a schematic structural diagram of a network element device according to an embodiment of this application. As shown in FIG. 13, a network element device 2000 may include: a processor 2001, a network interface 2003, and a memory 2004. In addition, the foregoing network element device 2000 may further include: at least one communication bus 2002. The communication bus 2002 is configured to realize connection and communication between these components. The network interface 2003 may optionally include standard wired interface and wireless interface (such as a WI-FI interface). The memory 2004 may be a high-speed random access memory (RAM) or may also be a non-volatile memory, such as at least one disk memory. The memory 2004 may optionally also be at least one storage apparatus away from the foregoing processor 2001. As shown in FIG. 13, the memory 2004, as a computer-readable storage medium, may include an operating system, a network communication module, and a device control application program. In the embodiments of this application, the network element device 2000 may be an edge application server discovery function.

In the network element device 2000 shown in FIG. 13, the network interface 2003 may provide a network communication function. The processor 2001 may be configured to invoke the device control application program stored in the memory 2004 to cause the network element device 2000 to perform:
receiving a domain name system response message transmitted by a domain name system server, the domain name system response message including at least two edge application server addresses;
selecting a target data network access identifier, and taking an edge application server address, having a mapping relationship with the target data network access identifier, in the at least two edge application server addresses as an offloading edge application server address; and
transmitting the offloading edge application server address and the target data network access identifier to a session management function, so that the session management function generates an offloading rule for an intermediate user plane function according to the offloading edge application server address, and establishes an offloading path between the intermediate user plane function and an edge anchor user plane function corresponding to the target data network access identifier.

It is to be understood that the network element device 2000 described in the embodiments of this application may implement the description of the data processing method in the foregoing embodiment corresponding to FIG. 5, which will not be described in detail here. In addition, the beneficial effects of using the same method will not be described in detail here.

Furthermore, the embodiments of this application also provide a computer-readable storage medium, which stores a computer program executed by the foregoing network element apparatus 2. The foregoing computer program includes program instructions that, when executed by the foregoing processor, are able to implement the description of the foregoing data processing method in the foregoing embodiment corresponding to FIG. 5, which will not be described in detail here. In addition, the beneficial effects of using the same method will not be described in detail here. For technical details that are not disclosed in the embodiments of the computer-readable storage medium involved in this application, reference is made to the description of the method embodiments of this application.

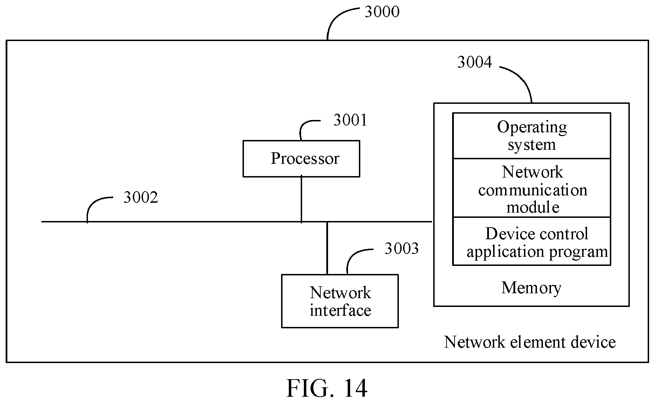

Referring to FIG. 14, FIG. 14 is a schematic structural diagram of a network element device according to an embodiment of this application. As shown in FIG. 14, a network element device 3000 may include: a processor 3001, a network interface 3003, and a memory 3004. In addition, the foregoing network element device 3000 may further include: at least one communication bus 3002. The communication bus 3002 is configured to realize connection and communication between these components. The network interface 3003 may optionally include standard wired interface and wireless interface (such as a WI-FI interface). The memory 3004 may be a high-speed random access memory (RAM) or may also be a non-volatile memory, such as at least one disk memory. The memory 3004 may optionally also be at least one storage apparatus away from the foregoing processor 3001. As shown in FIG. 14, the memory 3004, as a computer-readable storage medium, may include an operating system, a network communication module, and a device control application program. In the embodiments of this application, the network element device 3000 may be an intermediate user plane function.

In the network element device 3000 shown in FIG. 14, the network interface 3003 may provide a network communication function. The processor 3001 may be configured to invoke the device control application program stored in the memory 3004 to cause the network element device 3000 to perform:
receiving an offloading rule delivered by a session management function,
the offloading rule being generated according to an offloading edge application server address; the offloading rule being used for forwarding a service access request from user equipment for accessing the offloading edge application server address to an edge anchor user plane function corresponding to a target data network access identifier; the target data network access identifier being selected and obtained by the session management function after receiving a domain name system message report transmitted by an edge application server discovery function; and the domain name system message report including at least two edge application server addresses, and the offloading edge application server address referring to an edge application server address, having a mapping relationship with the target data network access identifier, in the at least two edge application server addresses.

It is to be understood that the network element device 3000 described in the embodiments of this application may implement the description of the data processing method in the foregoing embodiment corresponding to FIG. 6, which will not be described in detail here. In addition, the beneficial effects of using the same method will not be described in detail here.

Furthermore, the embodiments of this application also provide a computer-readable storage medium, which stores a computer program executed by the foregoing network element apparatus 3. The foregoing computer program includes program instructions that, when executed by the foregoing processor, are able to implement the description of the foregoing data processing method in the foregoing embodiment corresponding to FIG. 6, which will not be described in detail here. In addition, the beneficial effects of using the same method will not be described in detail here. For technical details that are not disclosed in the embodiments of the computer-readable storage medium involved in this application, reference is made to the description of the method embodiments of this application.

The foregoing computer-readable storage medium may be the network element apparatus provided in any one of the foregoing embodiments or an internal storage unit of the foregoing network element device, such as a hard disk or an internal memory of the network element device. The computer-readable storage medium may also be an external storage device of the network element device, such as a plug-in hard disk, a smart media card (SMC), a secure digital (SD) card, and a flash card provided on the network element device. Further, the computer-readable storage medium may also include both an internal storage unit and an external storage device of the network element device. The computer-readable storage medium is configured to store the computer program and other programs and data required by the network element device. The computer-readable storage medium may also be configured to temporarily store data that has been outputted or will be outputted.

Furthermore, it is to be pointed out here that the embodiments of this application also provide a computer program product or computer program, which includes computer instructions. The computer instructions are stored in a computer-readable storage medium. A processor of a network element device reads the computer instructions from the computer-readable storage medium, and executes the computer instructions to cause the network element device to perform the method provided in the foregoing embodiment corresponding to any one of FIG. 3, FIG. 5, and FIG. 6.

The terms "first", "second", and the like in the description, the claims, and the drawings of the embodiments of this application are used for distinguishing different objects rather than for describing a specific sequence. In addition, the terms "include" and any variations thereof are intended to cover a non-exclusive inclusion. For example, a process, method, apparatus, product or device that includes a series of steps or units is not limited to the listed steps or modules, but may optionally include steps or modules that are not listed or may optionally include other steps or units that are inherent to the process, method, apparatus, product or device.

Those of ordinary skill in the art will recognize that the exemplary units and algorithm steps described with reference to the embodiments disclosed herein may be implemented as electronic hardware, computer software or a combination of the two. To clearly describe the interchangeability of hardware and software, the exemplary compositions and steps have been generally described above in terms of network elements. Whether these network elements are implemented as hardware or software depends upon particular applications and design constraints of the technical solutions. Those skilled in the art may implement the described network elements in different ways for each particular application, but the implementation shall not be regarded as exceeding the scope of this application.

The methods and related apparatuses provided in the embodiments of this application are described with reference to the method flowcharts and/or schematic structural diagrams provided in the embodiments of this application, and specifically, each flow and/or block of the method flowchart and/or schematic structural diagram, and a combination of flows and/or blocks in the method flowchart and/or block diagram may be implemented by computer program instructions. These computer program instructions may be provided to a processor of a general purpose computer, special purpose computer, embedded processor or another programmable data processing device to create a machine, so that the instructions, executed by the processor of the computer or another programmable data processing device, create an apparatus configured to realize functions specified in one or more flows in the flowchart and/or one or more blocks in the schematic structural diagram. These computer program instructions may also be stored in a computer-readable memory that can direct a computer or another programmable data processing device to operate in a specific manner, so that the instructions stored in the computer-readable memory create a manufactured product including instruction apparatuses. The instruction apparatuses realize functions specified in one or more flows in the flowchart and/or one or more blocks in the schematic structural diagram. These computer program instructions may also be loaded onto a computer or another programmable data processing device to cause a series of operating steps to be performed on the computer or another programmable device to create a computer implemented process, so that the instructions executed on the computer or another programmable device provide steps for implementing functions specified in one or more flows in the flowchart and/or one or more blocks in the schematic structural diagram.

The above are merely exemplary embodiments of this application, and are not intended to limit the scope of the claims of this application. Therefore, equivalent variations made according to the claims of this application shall still fall within the scope of this application.

## Claims

1. A data processing method, comprising:
receiving, by a session management function, a domain name system message report transmitted by an edge application server discovery function, the domain name system message report comprising at least two edge application server addresses;
selecting, by the session management function, a target data network access identifier, and taking an edge application server address, having a mapping relationship with the target data network access identifier, in the at least two edge application server addresses as an offloading edge application server address; and
generating, by the session management function, an offloading rule for an intermediate user plane function according to the offloading edge application server address.

2. The method according to claim 1, wherein the selecting, by the session management function, a target data network access identifier comprises:
acquiring, by the session management function, a target edge application server address from the at least two edge application server addresses; and
taking, by the session management function, a data network access identifier having a mapping relationship with the target edge application server address as a target data network access identifier.

3. The method according to claim 1, wherein the selecting, by the session management function, a target data network access identifier comprises:
acquiring, by the session management function, data network access identifiers respectively having a mapping relationship with the at least two edge application server addresses to obtain one or more data network access identifiers to be selected;
querying, by the session management function, a payload condition of an edge anchor user plane function respectively corresponding to the one or more data network access identifiers to be selected; and
determining, by the session management function, a target data network access identifier from the one or more data network access identifiers to be selected according to the payload condition.

4. The method according to claim 1, wherein the selecting, by the session management function, a target data network access identifier comprises:
acquiring, by the session management function, data network access identifiers respectively having a mapping relationship with the at least two edge application server addresses to obtain one or more data network access identifiers to be selected;
acquiring, by the session management function, a predicted average payload condition of an edge anchor user plane function respectively corresponding to the one or more data network access identifiers to be selected within a target time period; and
determining, by the session management function, a target data network access identifier from the one or more data network access identifiers to be selected according to the predicted average payload condition.

5. The method according to claim 1, wherein the selecting, by the session management function, a target data network access identifier comprises:
acquiring, by the session management function, data network access identifiers respectively having a mapping relationship with the at least two edge application server addresses to obtain one or more data network access identifiers to be selected; and
determining, by the session management function, a target data network access identifier from the one or more data network access identifiers to be selected according to a polling mechanism.

6. The method according to any one of claims 1 to 5, further comprising:
establishing, by the session management function, an offloading path between the intermediate user plane function and an edge anchor user plane function corresponding to the target data network access identifier; and
delivering, by the session management function, the offloading rule to the intermediate user plane function, so that the intermediate user plane function forwards a service access request from user equipment for accessing the offloading edge application server address to the edge anchor user plane function based on the offloading rule and the offloading path, the edge anchor user plane function being configured to forward the service access request to an edge application server corresponding to the offloading edge application server address.

7. The method according to any one of claims 1 to 6, further comprising:
transmitting, by the session management function, the offloading edge application server address to the edge application server discovery function, so that the edge application server discovery function transmits the offloading edge application server address to the user equipment.

8. A data processing method, comprising:
receiving, by an edge application server discovery function, a domain name system response message transmitted by a domain name system server, the domain name system response message comprising at least two edge application server addresses;
selecting, by the edge application server discovery function, a target data network access identifier, and taking an edge application server address, having a mapping relationship with the target data network access identifier, in the at least two edge application server addresses as an offloading edge application server address; and
transmitting, by the edge application server discovery function, the offloading edge application server address and the target data network access identifier to a session management function, so that the session management function generates an offloading rule for an intermediate user plane function according to the offloading edge application server address, and establishes an offloading path between the intermediate user plane function and an edge anchor user plane function corresponding to the target data network access identifier.

9. The method according to claim 8, further comprising:
transmitting, by the edge application server discovery function, the offloading edge application server address to user equipment after the offloading rule is generated and the offloading path is established.

10. A data processing method, comprising:
receiving, by an intermediate user plane function, an offloading rule delivered by a session management function, the offloading rule being generated according to an offloading edge application server address, the offloading rule being used for forwarding a service access request from user equipment for accessing the offloading edge application server address to an edge anchor user plane function corresponding to a target data network access identifier, the target data network access identifier being selected and obtained by the session management function after receiving a domain name system message report transmitted by an edge application server discovery function, and the domain name system message report comprising at least two edge application server addresses, and the offloading edge application server address referring to an edge application server address, having a mapping relationship with the target data network access identifier, in the at least two edge application server addresses; and
forwarding, by the intermediate user plane function, the service access request from the user equipment for accessing the offloading edge application server address to the edge anchor user plane function corresponding to the target data network access identifier based on the offloading rule and an offloading path, so that the edge anchor user plane function forwards the service access request to an edge application server corresponding to the offloading edge application server address, the offloading path being an offloading path between the intermediate user plane function and the edge anchor user plane function corresponding to the target data network access identifier that is established by the session management function.

11. The method according to claim 10, wherein the forwarding, by the intermediate user plane function, the service access request from the user equipment for accessing the offloading edge application server address to the edge anchor user plane function corresponding to the target data network access identifier based on the offloading rule and offloading path comprises:
receiving, by the intermediate user plane function, a target service access request transmitted by the user equipment, the target service access request carrying a target edge application server address; and
forwarding the target service access request to the edge anchor user plane function corresponding to the target data network access identifier via the offloading rule and the offloading path in a case that the intermediate user plane function finds out an edge application server address that is the same as the target edge application server address from the offloading edge application server addresses, so that the edge anchor user plane function forwards the target service access request to an edge application server corresponding to the target edge application server address.

12. The method according to claim 10 or 11, wherein the edge application server corresponding to the offloading edge application server address is configured to provide an edge application service for the user equipment; and
there are at least two offloading edge application server addresses, and the at least two offloading edge application server addresses comprise a first offloading edge application server address and a second offloading edge application server address; and the second offloading edge application server address is an edge application server address that is carried in a service access request initiated by the user equipment after the access to the edge application service via the first offloading edge application server address fails.

13. A network element apparatus, comprising:
a report receiving module, configured to receive, by a session management function, a domain name system message report transmitted by an edge application server discovery function, the domain name system message report comprising at least two edge application server addresses;
an identifier selection module, configured to select a target data network access identifier;
an address selection module, configured to take an edge application server address, having a mapping relationship with the target data network access identifier, in the at least two edge application server addresses as an offloading edge application server address; and
a rule generation module, configured to generate an offloading rule for an intermediate user plane function according to the offloading edge application server address.

14. The apparatus according to claim 13, wherein the identifier selection module comprises:
a first acquisition unit, configured to acquire a target edge application server address from the at least two edge application server addresses; and
a first determination unit, configured to take a data network access identifier having a mapping relationship with the target edge application server address as a target data network access identifier.

15. The apparatus according to claim 13, wherein the identifier selection module comprises:
a second acquisition unit, configured to acquire data network access identifiers respectively having a mapping relationship with the at least two edge application server addresses to obtain one or more data network access identifiers to be selected;
a query unit, configured to query a payload condition of an edge anchor user plane function respectively corresponding to the one or more data network access identifiers to be selected; and
a second determination unit, configured to determine a target data network access identifier from the one or more data network access identifiers to be selected according to the payload condition.

16. The apparatus according to claim 13, wherein the identifier selection module comprises:
a third acquisition unit, configured to acquire data network access identifiers respectively having a mapping relationship with the at least two edge application server addresses to obtain one or more data network access identifiers to be selected;
a prediction unit, configured to acquire a predicted average payload condition of an edge anchor user plane function respectively corresponding to the one or more data network access identifiers to be selected within a target time period; and
a third determination unit, configured to determine a target data network access identifier from the one or more data network access identifiers to be selected according to the predicted average payload condition.

17. The apparatus according to claim 13, wherein the identifier selection module comprises:
a polling unit, configured to acquire data network access identifiers respectively having a mapping relationship with the at least two edge application server addresses to obtain one or more data network access identifiers to be selected; and
the polling unit is further configured to determine a target data network access identifier from the one or more data network access identifiers to be selected according to a polling mechanism.

18. The apparatus according to claim 13, further comprising:
a path establishment module, configured to establish an offloading path between the intermediate user plane function and an edge anchor user plane function corresponding to the target data network access identifier; and
a rule delivery module, configured to deliver the offloading rule to the intermediate user plane function, so that the intermediate user plane function forwards a service access request from user equipment for accessing the offloading edge application server address to the edge anchor user plane function based on the offloading rule and the offloading path, the edge anchor user plane function being configured to forward the service access request to an edge application server corresponding to the offloading edge application server address.

19. The apparatus according to claim 13, further comprising:
an address transmission module, configured to transmit the offloading edge application server address to the edge application server discovery function, so that the edge application server discovery function transmits the offloading edge application server address to the user equipment.

20. A network element apparatus, comprising:
a receiving module, configured to receive, by an edge application server discovery function, a domain name system response message transmitted by a domain name system server, the domain name system response message comprising at least two edge application server addresses;
an identifier selection module, configured to select a target data network access identifier;
an address selection module, configured to take an edge application server address, having a mapping relationship with the target data network access identifier, in the at least two edge application server addresses as an offloading edge application server address; and
a transmission module, configured to transmit the offloading edge application server address and the target data network access identifier to a session management function, so that the session management function generates an offloading rule for an intermediate user plane function according to the offloading edge application server address, and establishes an offloading path between the intermediate user plane function and an edge anchor user plane function corresponding to the target data network access identifier.

21. The apparatus according to claim 20, further comprising:
a response transmission module, configured to transmit the offloading edge application server address to user equipment after the offloading rule is generated and the offloading path is established.

22. A network element apparatus, comprising:
a rule receiving module, configured to receive, by an intermediate user plane function, an offloading rule delivered by a session management function, the offloading rule being generated according to an offloading edge application server address, the offloading rule being used for forwarding a service access request from user equipment for accessing the offloading edge application server address to an edge anchor user plane function corresponding to a target data network access identifier, the target data network access identifier being selected and obtained by the session management function after receiving a domain name system message report transmitted by an edge application server discovery function, the domain name system message report comprising at least two edge application server addresses, and the offloading edge application server address referring to an edge application server address, having a mapping relationship with the target data network access identifier, in the at least two edge application server addresses; and
further comprising:
a request forwarding module, configured to forward the service access request from the user equipment for accessing the offloading edge application server address to the edge anchor user plane function corresponding to the target data network access identifier based on the offloading rule and an offloading path, so that the edge anchor user plane function forwards the service access request to an edge application server corresponding to the offloading edge application server address, the offloading path being an offloading path between the intermediate user plane function and the edge anchor user plane function corresponding to the target data network access identifier that is established by the session management function.

23. The apparatus according to claim 22, wherein the request forwarding module comprises:
a receiving unit, configured to receive a target service access request transmitted by the user equipment, the target service access request carrying a target edge application server address; and
a forwarding unit, configured to forward the target service access request to the edge anchor user plane function corresponding to the target data network access identifier via the offloading rule and the offloading path in a case that an edge application server address that is the same as the target edge application server address is found out from the offloading edge application server addresses, so that the edge anchor user plane function forwards the target service access request to an edge application server corresponding to the target edge application server address.

24. The apparatus according to claim 22 or 23, wherein the edge application server corresponding to the offloading edge application server address is configured to provide an edge application service for the user equipment; there are at least two offloading edge application server addresses, and the at least two offloading edge application server addresses comprise a first offloading edge application server address and a second offloading edge application server address; and the second offloading edge application server address is an edge application server address that is carried in a service access request initiated by the user equipment after the access to the edge application service via the first offloading edge application server address fails.

25. A network element device, comprising: a processor, a memory, and a network interface, the processor being connected to the memory and the network interface, the network interface being configured to provide a data communication function, the memory being configured to store program codes, and the processor being configured to invoke the program codes to cause the network element device to perform the method according to any one of claims 1 to 12.

26. A computer-readable storage medium, storing a computer program therein, the computer program being adapted to be loaded and executed by a processor to perform the method according to any one of claims 1 to 12.

27. A computer program product, comprising computer instructions, the computer instructions being adapted to be loaded and executed by a processor to perform the method according to any one of claims 1 to 12.
